# EUROPEAN PATENT SPECIFICATION

(11) **EP 3 570 169 B1**
(45) Date of publication and mention of the grant of the patent: **24.02.2021**
(21) Application number: 18893326.1
(22) Date of filing: 02.04.2018
(51) Int. Cl.: G06F 11/14, G06F 11/20

(54) **METHOD AND SYSTEM FOR PROCESSING DEVICE FAILURE**
VERFAHREN UND SYSTEM ZUR VERARBEITUNG VON VORRICHTUNGSAUSFALL
PROCÉDÉ ET SYSTÈME DE TRAITEMENT DE DÉFAILLANCE DE DISPOSITIF

(30) Priority: 19.03.2018 CN 201810226159
(43) Date of publication of application: 20.11.2019
(73) Proprietor: Wangsu Science & Technology Co., Ltd., Shanghai 200030 (CN)
(72) Inventor: FAN, Jiaxing, Shanghai 200030 (CN); GUO, Xiaochun, Shanghai 200030 (CN)
(74) Representative: de Arpe Fernandez, Manuel
(86) International application number: PCT/CN2018/081562
(87) International publication number: WO 2019/178891

(56) References cited:
- CN-A- 105 117 171
- CN-A- 105 991 325
- CN-A- 107 547 653
- US-A1- 2014 019 405
- US-A1- 2016 171 073
- US-A1- 2017 262 346
- US-A1- 2017 371 542
- US-B1- 9 483 367

## Description

### FIELD OF THE DISCLOSURE

The present disclosure generally relates to the field of data storage technology and, more particularly, relates to a method and system for processing device failure.

### BACKGROUND

At present, there are more and more types of network services. Meanwhile, the functions of the network services are becoming more and more abundant. As such, a huge amount of data is generated. Service providers generally use distributed storage systems to store data, in which the data may be distributed across multiple storage servers (may also be called "storage nodes") in a storage cluster.

When a distributed storage system provides storage services, it may create multiple copies of data for each piece of data and store them in multiple storage nodes. If one storage node fails and cannot continue providing data storage services, the cluster management node of the distributed storage system may first determine the data stored by the failed node, and then search for the multiple storage nodes that store the corresponding data copies. Meanwhile, the cluster management node may select a plurality of target storage nodes, and then instruct the storage nodes that store the corresponding data copies to restore the data to the plurality of target storage nodes by using the stored data copies.

In the process of implementing the present disclosure, it has been found that the existing technologies have at least the following problems:

The foregoing multiple storage nodes for data restore need to allocate a large amount of device processing resources to perform the above data restore process, so that there are not enough device processing resources to provide data storage services, and thus the quality of storage service of the distributed storage system is poor.

The document CN 105117171 A discloses an energy massive data distributed processing system and a distributed processing method thereof. According to the energy massive data distributional processing system, attribute information, such as a path, time and the like, of storage files of massive historical data and the data are separately stored, the attribute information of the files are stored on a management server, data information is stored on nodes of a data server and data fragments are stored on a plurality of different servers in a form of binary files.

The document CN 105991325A discloses a method, device and system for processing a fault in at least one distributed cluster. At least one distributed cluster comprises a first distributed cluster, and the first distributed cluster comprises a first Master node, a first Slave node, a first reference node, and a first backup node serving as a backup of the first Master node.

The document US 2016/0171073 A1 discloses a database system which includes nodes that communicate with each other to elect one node among the nodes, serving as a management device.

The document US 2014/0019405 A1 describes switching an active metadata node and an indication that a standby metadata node of a distributed file system should replace an active metadata node of the distributed file system as a new active metadata node of the distributed file system is received.

The document US 9,483,367 B1 discloses systems and methods for determining whether a distributed storage cluster is operating with a last failure domain.

### BRIEF SUMMARY OF THE DISCLOSURE

To solve the problems in the existing technologies, the embodiments the present disclosure provide a method and system for processing device failure. The invention is defined in detail in the appended independent claims, whereas preferred embodiments of the invention are set forth in the appended dependent claims.

The beneficial effects brought by the embodiments of the present disclosure are as follows.

In the disclosed embodiments of the present disclosure, the target standby device associated with the target shared storage device detects the operating status of the target control device that manages the target shared storage device. If the target control device fails, the target standby device sends a management request to the target shared storage device, and sends a replacement request for the target control device to the cluster management node. The target shared storage device sets the target standby device as the local management device, and the cluster management node determines that the target standby device is the replacement device of the target control device. In this way, for a storage node that may store data in the shared storage device, when the control device of the storage node fails, the backup device associated with the shared storage device may serve as a replacement device for the control device, and take the place of the control device to continue providing services. There is no requirement for other storage nodes to consume equipment processing resources for the data restore process, so the quality of storage service of the distributed storage system can be ensured to some extent.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a schematic structural diagram of a system for processing device failure according to some embodiments of the present disclosure;
FIG. 2 is a schematic structural diagram of another system for processing device failure according to some embodiments of the present disclosure; and
FIG. 3 is a flowchart of a method for processing device failure according to some embodiments of the present disclosure.

### DETAILED DESCRIPTION

To make the objectives, technical solutions, and advantages of the present disclosure clearer, specific embodiments of the present disclosure will be made in detail with reference to the accompanying drawings.

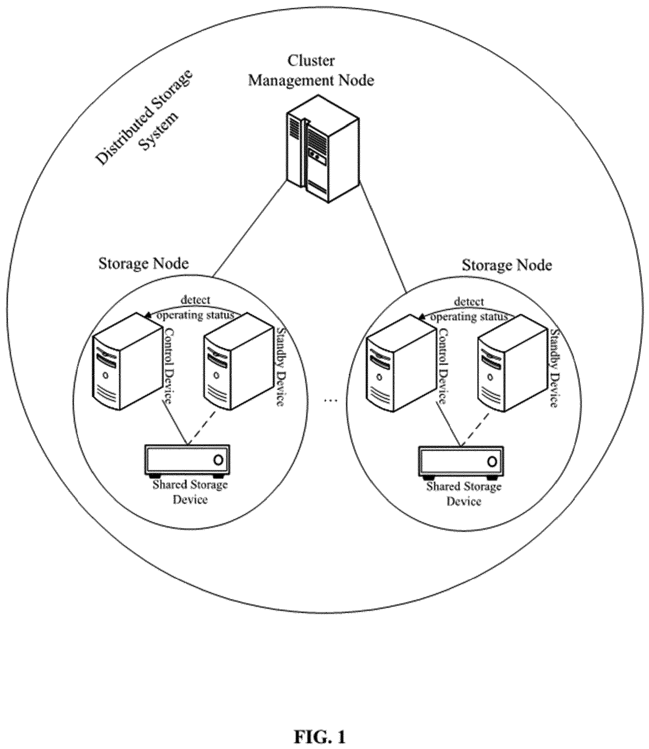

The embodiments of the present disclosure provide a method for processing device failure. The execution entity of the method is a distributed storage system, which may be deployed in a computer room of a service provider. As shown in FIG. 1, the distributed storage system includes a storage cluster that comprises a cluster management node and a plurality of storage nodes. Each storage node includes a shared storage device, and each shared storage device may be associated with a control device and a standby device through wired or wireless communication. Here, the cluster management node may manage storage nodes in the storage cluster, such as adding and removing storage nodes in the storage cluster, detecting service statuses of the storage nodes, and so forth. The control device of a storage node may provide data storage and reading services, and may store data in the shared storage device associated with the control device. After the control device fails, the standby device may serve as a replacement device of the control device, to replace the control device in providing the data storage and reading services.

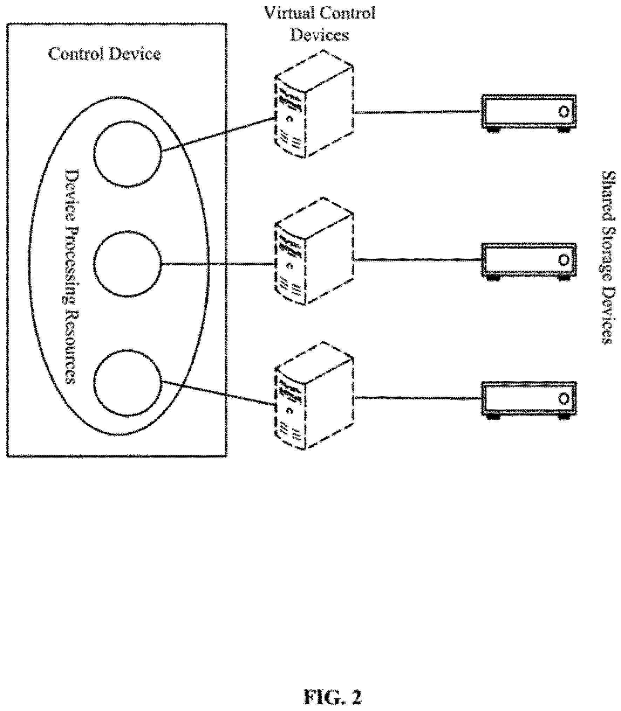

In some embodiments, as shown in FIG. 2, a single control device may utilize its own device processing resources to create multiple virtual control devices, each of which may provide data storage and reading services. In this way, each virtual control device may act as a control device for a storage node and may be associated with different shared storage devices.

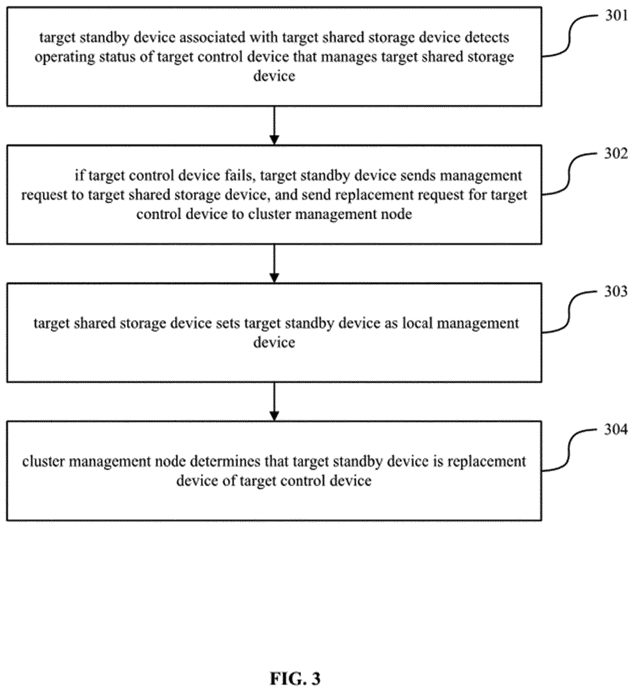

A processing flow of processing device failure shown in FIG. 3 will be described in detail with reference to specific embodiments, which may be as follows.

Step 301: A target standby device associated with a target shared storage device detects an operating status of a target control device that manages the target shared storage device.

The operating status of a target control device may be classified into a normal state and a fault state.

In some implementations, when a target control device is in a normal state, it may receive a data storing or reading request from an external device, and store or read the corresponding data in the managed target shared storage device. A target standby device associated with the target shared storage device may detect the operating status of the target control device by periodically sending a heartbeat query request to the target control device. If the target standby device receives a heartbeat response from the target control device within a predefined time period, the target control device may be recorded as a normal state. Otherwise, the target control device is recorded as a fault state.

Step 302: If the target control device fails, the target standby device sends a management request to the target shared storage device, and sends a replacement request for the target control device to the cluster management node.

In some implementations, when the target control device has a failure, such as a downtime or hardware damage, the target standby device may detect that the target control device is in a fault state. The target standby device may then send a management request to the target shared storage device to take over the management function of the target control device for the target shared storage device. Meanwhile, the target standby device may also send a replacement request for the target control device to the cluster management node, to allow it to serve as a replacement device of the target control device, to replace the target control device to continue providing data storage and reading services.

Step 303: The target shared storage device sets the target standby device as a local management device.

In some implementations, after receiving the management request sent by the target standby device, the target shared storage device may negate the management right of the target control device, and set the target standby device as the local management device of the target shared storage device based on the management request.

Optionally, the specific process of Step 303 may be as follows: the target shared storage device determines that the target standby device is the local management device of the target shared storage device by changing the ownership information of the target shared storage device to the metadata information of the target standby device.

Here, the management request sent to the target shared storage device by the target standby device includes the metadata information of the target standby device.

In some implementations, the local management device of a target shared storage device may be determined by the ownership information recorded in the target shared storage device. Therefore, the local management device of the target shared storage device may be replaced by changing the ownership information recorded in the target shared storage device. The ownership information may be the metadata information of a device, such as a device identifier, a communication address, etc. Here, the device identifier may be a unique identifier of the device itself, for example, A2001, and the communication address may be the IP (Internet Protocol) address, for example, 1.1.1.106. When it is detected that the target control device is in a fault state, the target standby device may send a management request including the metadata information of the target standby device to the target shared storage device. Thereafter, the target shared storage device may receive the management request and obtain the metadata information of the target standby device from the management request. The target shared storage device may then change the locally recorded ownership information to the metadata information of the target standby device, so that the target standby device may be determined to be the local management device of the target shared storage device.

Step 304: The cluster management node determines that the target standby device is the replacement device of the target control device.

In some implementations, after receiving the replacement request for the target control device sent by the target standby device, the cluster management node may determine that the target standby device is the replacement device of the target control device. Further, the cluster management node may also send a heartbeat query request to the target control device to detect the operating status of the target control device. If it is detected that the target control device is in a fault state, the cluster management node may implement the above replacement request and confirm that the target standby device is the replacement device of the target control device. Otherwise, the replacement request is rejected. In this way, the cluster management node may identify a wrong replacement request so that the normal operation of the target control device is ensured.

Optionally, the specific process of Step 304 may be as follows: the cluster management node determines that the target standby device is the replacement device of the target control device by changing the metadata information for the node identifier of the storage node, to which the target control device belongs, to the metadata information of the target standby device.

Here, the replacement request for the target control device sent by the target standby device to the cluster management node includes the node identifier of the storage node to which the target control device belongs and the metadata information of the target standby device.

In some implementations, after the target standby device takes over the target shared storage device, the target standby device may obtain the node identifier of the storage node, to which the target control device belongs, from the target shared storage device. The target standby device may then generate a replacement request that includes the node identifier of the storage node to which the target control device belongs and the metadata information of the target standby device, and send the replacement request to the cluster management node. After receiving the replacement request sent by the target standby device, the cluster management node may change the metadata information for the node identifier of the storage node, to which the target control device belongs, to the metadata information of the target standby device. The cluster management node may then determine that the target standby device is the replacement device for the target control device.

Optionally, when a standby device manages a shared storage device, the cluster management node may also determine an idle device as a backup device of the standby device. The corresponding process may be as follows: when it is determined that the target standby device is the replacement device of the target control device, the cluster management node may randomly designate a target idle device from at least one idle device associated with the target shared storage device, to allow the target idle device to detect the operating status of the target standby device.

In some implementations, in addition to a control device and a backup device, each shared storage device may also be associated with at least one idle device. In this way, after the cluster management node determines that the target standby device is the replacement device of the target control device, in order to cope with a failure of the target standby device, the cluster management node may randomly designate a target idle device, from at least one idle device associated with the target shared storage device, as the standby device of the target standby device. The target idle device may detect the operating status of the target standby device. If the target standby device fails, the subsequent process of the target idle device may refer to the implementation process of the target standby device, which is not repeated here again.

Optionally, a cluster management node may only respond to a replacement request received within a predefined time period. The corresponding process may be as follows: the cluster management node detects the operating statuses of all the control devices. If a replacement request is received within a predefined time period after a target control device is detected to be in a fault state, the cluster management node determines that the target standby device is the replacement device of the target control device. Otherwise, reselect an idle device, from at least one idle device associated with the target shared storage device, as the target standby device.

In some implementations, the cluster management node may periodically send a heartbeat query request to the control device of a storage node to detect the service status of the storage node. When the cluster management node detects that the target control device is in a fault state, the cluster management node may begin timing. If the cluster management node receives a replacement request for the target control device within a predefined time period, for example, 2 seconds, the replacement request is executed, and the target standby device is determined to be the replacement device of the target control device. If the cluster management node does not receive a replacement request for the target control device within the predefined time period, the cluster management node may reselect an idle device, from at least one idle device associated with the target shared storage device, as the target standby device. The reselected target standby device may send a management request to the target shared storage device, and send a replacement request for the target control device to the cluster management node according to the above process. For the remaining process, reference may be made to the previously-described process, which is not repeated here again.

Optionally, after the target standby device is determined to be the replacement device of the target control device, the cluster management node may further update and push a node information list. The corresponding process may be as follows: the cluster management node updates the metadata information for the node identifier of the storage node, to which the target control device belongs, in the node information list to the metadata information of the target standby device, and pushes the updated node information list to all the storage nodes.

In some implementations, the cluster management node may maintain a node information list. The node information list records the node identifiers, metadata information, and service statuses of all the storage nodes within a storage cluster. Here, a node identifier includes identification information that may uniquely identify a storage node. The metadata information may be an access address, such as an IP address, used by a control device to provide data storage and reading services. The service status may be the operating status of a control device. The cluster management node may push the locally maintained node information list to all the storage nodes, so that a storage node obtains the current metadata information of each storage node through the node information list, and store and read data within each storage node through the instant metadata information of each storage node. Further, after determining that a target standby device is the replacement device of a target control device, the cluster management node may update the metadata information for the node identifier of a storage node, to which the target control device belongs, in the node information list to the metadata information of the target standby device. Meanwhile, the cluster management node may push the updated node information list to all the storage nodes, so that each storage node may obtain the updated metadata information in time.

In the disclosed embodiments of the present disclosure, the target standby device associated with the target shared storage device detects the operating status of the target control device that manages the target shared storage device. If the target control device fails, the target standby device sends a management request to the target shared storage device, and sends a replacement request for the target control device to the cluster management node. The target shared storage device sets the target standby device as the local management device, and the cluster management node determines that the target standby device is the replacement device of the target control device. In this way, for a storage node that may store data in the shared storage device, when the control device of the storage node fails, the backup device associated with the shared storage device may serve as a replacement device for the control device, and take the place of the control device to continue providing services. There is no requirement for other storage nodes to consume equipment processing resources for the data restore process, so the quality of storage service of the distributed storage system can be ensured to some extent.

Based on the similar technical concepts, the embodiments of the present disclosure further provide a system for processing device failure. As shown in FIG. 1 or FIG. 2, the system is a distributed storage system that includes a cluster management node and a plurality of storage nodes. Each storage node includes a shared storage device, and each shared storage device is associated with a control device and a standby device, where:
a target standby device is configured to detect an operating status of a target control device that manages a target shared storage device, and the target standby device is associated with the target shared storage device;
the target standby device is further configured to: if the target control device fails, send a management request to the target shared storage device, and send a replacement request for the target control device to the cluster management node;
the target shared storage device is configured to set the target standby device as a local management device; and
the cluster management node is configured to determine that the target standby device is a replacement device of the target control device.

Optionally, the management request includes metadata information of the target standby device, and the target shared storage device is further configured to:
determine that the target standby device is the local management device of the target shared storage device by changing ownership information of the target shared storage device to the metadata information of the target standby device.

Optionally, the replacement request includes a node identifier of a storage node to which the target control device belongs and metadata information of the target standby device, and the cluster management node is further configured to:
determine that the target standby device is the replacement device of the target control device by changing metadata information for the node identifier of the storage node, to which the target control device belongs, to the metadata information of the target standby device.

Optionally, each shared storage device is further associated with at least one idle device, and the cluster management node is further configured to:
when it is determined that the target standby device is the replacement device of the target control device, randomly designate a target idle device from at least one idle device associated with the target shared storage device, to allow the target idle device to detect an operating status of the target standby device.

Optionally, the cluster management node is further configured to:
update the metadata information for the node identifier of the storage node, to which the target control device belongs, in a node information list to the metadata information of the target standby device, and push the updated node information list to all storage nodes within a storage cluster.

In the disclosed embodiments of the present disclosure, the target standby device associated with the target shared storage device detects the operating status of the target control device that manages the target shared storage device. If the target control device fails, the target standby device sends a management request to the target shared storage device, and sends a replacement request for the target control device to the cluster management node. The target shared storage device sets the target standby device as the local management device, and the cluster management node determines that the target standby device is the replacement device of the target control device. In this way, for a storage node that may store data in the shared storage device, when the control device of the storage node fails, the backup device associated with the shared storage device may serve as a replacement device for the control device, and take the place of the control device to continue providing services. There is no requirement for other storage nodes to consume equipment processing resources for the data restore process, so the quality of storage service of the distributed storage system can be ensured to some extent.

Through the foregoing description of the disclosed embodiments, it is clear to those skilled in the art that the various embodiments may be implemented in the form of software with a necessary general hardware platform, or implemented in the form of hardware. In light of this understanding, the above technical solutions, or essentially the parts that contribute to the existing technologies, may take the form of software products. The computer software products may be stored in a computer-readable storage medium, such as a ROM/RAM, a magnetic disk, or an optical disc, that includes a set of instructions to direct a computing device (may be a personal computer, a server, or a network device, etc.) to implement each disclosed embodiment or part of the described methods of the disclosed embodiments.

Although the present disclosure has been described as above with reference to some preferred embodiments, these embodiments should not be constructed as limiting the present disclosure.

## Claims

1. A method for processing device failure in a distributed storage system, the distributed storage system including a cluster management node and a plurality of storage nodes, each storage node including a shared storage device, and each shared storage device being associated with a control device and a standby device, and the method comprising:
detecting (301), by a target standby device associated with a target shared storage device, an operating status of a target control device that stores and reads data in the target shared storage device and manages the target shared storage device;
if the target control device fails (302), sending, by the target standby device, a management request to the target shared storage device, and sending, by the target standby device, a replacement request for the target control device to the cluster management node;
setting (303), by the target shared storage device, the target standby device as a local management device; and
determining (304), by the cluster management node, that the target standby device is a replacement device of the target control device, such that the target standby device stores and reads data in the target shared storage device and manages the target shared storage device, whereby the target standby device replaces the target control device in providing data storage and reading services.

2. The method according to claim 1, wherein the management request includes metadata information of the target standby device, and setting, by the target shared storage device, the target standby device as the local management device includes:
determining, by the target shared storage device, that the target standby device is the local management device of the target shared storage device by changing ownership information of the target shared storage device to the metadata information of the target standby device.

3. The method according to claim 1, wherein the replacement request includes a node identifier of a storage node to which the target control device belongs and metadata information of the target standby device, and determining, by the cluster management node, that the target standby device is the replacement device of the target control device includes:
determining, by the cluster management node, that the target standby device is the replacement device of the target control device by changing metadata information for the node identifier of the storage node, to which the target control device belongs, to the metadata information of the target standby device.

4. The method according to claim 1, wherein each shared storage device is further associated with at least one idle device, and the method further includes:
when it is determined that the target standby device is the replacement device of the target control device, randomly designating, by the cluster management node, a target idle device from at least one idle device associated with the target shared storage device, to allow the target idle device to detect an operating status of the target standby device.

5. The method according to claim 3, after determining, by the cluster management node, that the target standby device is the replacement device of the target control device, the method further includes:
updating, by the cluster management node, the metadata information for the node identifier of the storage node, to which the target control device belongs, in a node information list to the metadata information of the target standby device, and pushing, by the cluster management node, the updated node information list to all storage nodes within a storage cluster.

6. A system for processing device failure in a distributed storage system, the distributed storage system including a cluster management node and a plurality of storage nodes, each storage node comprising a shared storage device, and each shared storage device being associated with one control device and one standby device, wherein:
a target standby device is configured to detect an operating status of a target control device that manages a target shared storage device associated with the target control device and the target standby device and stores and reads data in the target shared storage device;
the target standby device is further configured to: if the target control device fails, send a management request to the target shared storage device, and send a replacement request for the target control device to the cluster management node;
the target shared storage device is configured to set the target standby device as a local management device; and
the cluster management node is configured to determine that the target standby device is a replacement device of the target control device, such that the target standby device stores and reads data in the target shared storage device and manages the target shared storage device, whereby the target standby device replaces the target control device in providing data storage and reading services.

7. The system according to claim 6, wherein the management request includes metadata information of the target standby device, and the target shared storage device is further configured to:
determine that the target standby device is the local management device of the target shared storage device by changing ownership information of the target shared storage device to the metadata information of the target standby device.

8. The system according to claim 6, wherein the replacement request includes a node identifier of a storage node to which the target control device belongs and metadata information of the target standby device, and the cluster management node is further configured to:
determine that the target standby device is the replacement device of the target control device by changing metadata information for the node identifier of the storage node, to which the target control device belongs, to the metadata information of the target standby device.

9. The system according to claim 6, wherein each shared storage device is further associated with at least one idle device, and the cluster management node is further configured to:
when it is determined that the target standby device is the replacement device of the target control device, randomly designate a target idle device from at least one idle device associated with the target shared storage device, to allow the target idle device to detect an operating status of the target standby device.

10. The system according to claim 8, wherein the cluster management node is further configured to:
update the metadata information for the node identifier of the storage node, to which the target control device belongs, in a node information list to the metadata information of the target standby device, and push the updated node information list to all storage nodes within a storage cluster.

## Patentansprüche

1. Eine Methode zur Verarbeitung eines Geräteversagen in einem verteilten Speichersystem, wobei das verteilte Speichersystem einen Clusterverwaltungsknoten und eine Vielzahl von Speicherknoten einschliesst, jeder Speicherknoten ein gemeinsames Speichergerät einschliesst und jedes gemeinsame Speichergerät mit einem Steuergerät und einem Reservegerät verknüpft wird und die Methode Folgendes umfasst:
Erfassung (301) durch ein mit einem gemeinsamen Zielspeichergerät verknüpftes Zielreservegerät eines Verarbeitungszustandes eines Zielsteuergeräts, das Daten in dem gemeinsamen Zielspeichergerät speichert und das gemeinsame Zielspeichergerät verwaltet;
wenn das Zielsteuergerät ausfällt (302) Übermittlung durch das Zielreservegerät einer Verwaltungsanforderung an das gemeinsame Zielspeichergerät, und Übermittlung durch das Zielreservegerät einer Austauschanforderung für das Zielsteuergerät an den Clusterverwaltungsknoten;
Einstellung (303) des Zielreservegeräts durch das gemeinsame Zielspeichergerät als ein lokales Verwaltungsgerät; und
Bestimmung (304) durch den Clusterverwaltungsknoten, dass das Zielreservegerät ein Ersatzgerät des Zielsteuergeräts ist, so dass das Zielreservegerät Daten in dem gemeinsamen Zielspeichergerät speichert und liest und das gemeinsame Zielspeichergerät verwaltet, wodurch das Zielreservegerät das Zielsteuergerät ersetzt und Datenspeicherungs- und Datenlesungsdienste liefert.

2. Die Methode gemäss Anspruch 1, bei der die Verwaltungsanforderung Metadateninformation des Zielreservegeräts und Einstellung des Zielreservegeräts durch das gemeinsame Zielspeichergerät als das lokale Verwaltungsgerät einschliesst, Methode, die Folgendes umfasst:
Bestimmung durch das gemeinsame Zielspeichergerät, dass das Zielreservegerät das lokale Verwaltungsgerät des gemeinsamen Zielspeichergeräts ist und zwar durch Wechseln der Besitzinformation des gemeinsamen Zielspeichergeräts zu der Metadateninformation des Zielreservegeräts.

3. Die Methode gemäss Anspruch 1, bei der die Austauschanforderung eine Knotenidentifizierung eines Speicherknotens einschliesst, zu dem das Zielsteuergerät gehört, und die Metadateninformation des Zielreservegeräts und die Bestimmung durch den Clusterverwaltungsknoten, dass das Zielreservegerät das Ersatzgerät des Zielsteuergeräts ist, schliesst Folgendes ein:
Bestimmung durch den Clusterverwaltungsknoten, dass das Zielreservegerät das Ersatzgerät des Zielsteuergeräts ist, indem die Metadateninformation für die Knotenidentifizierung des Speicherknotens, zu dem das Zielsteuergerät gehört, durch die Metadateninformation des Zielreservegeräts ersetzt wird.

4. Die Methode gemäss Anspruch 1, bei der jedes gemeinsame Speichergerät ausserdem mit mindestens einem im Ruhestand befindlichen Gerät verbunden ist, und die Methode ausserdem Folgendes einschliesst:
Wenn bestimmt wird, dass das Zielreservegerät das Ersatzgerät des Zielsteuergeräts ist, willkürliche Festlegung durch den ClusterVerwaltungsknoten eines im Ruhestand befindlichen Zielgeräts von mindestens einem im Ruhestand befindlichen Gerät, das mit dem gemeinsamen Zielspeichergerät verbunden ist, damit das im Ruhestand befindliche Zielgerät einen Verarbeitungszustand des Zielreservegeräts erfassen kann.

5. Die Methode gemäss Anspruch 3, bei der nach Bestimmung durch den Clusterverwaltungsknoten, dass das Zielreservegerät das Ersatzgerät des Zielsteuergeräts ist, die Methode weiter Folgendes umfasst:
Aktualisierung durch den Clusterverwaltungsknoten der Metadateninformation für die Knotenidentifizierung des Speicherknotens, zu dem das Zielsteuergerät gehört, in einer Knoteninformationsliste der Metadateninformation des Zielreservegeräts und Einspeicherung durch den Clusterverwaltungsknoten der aktualisierten Knoteninformationsliste an alle Speicherknoten innerhalb eines Speicher-Clusters.

6. Ein System zur Verarbeitung eines Geräteversagens in einem verteilten Speichersystem, wobei das verteilte Speichersystem einen Clusterverwaltungsknoten und eine Vielzahl an Speicherknoten einschliesst, jeder Speicherknoten ein gemeinsames Speichergerät umfasst und jedes gemeinsame Speichergerät mit einem Steuergerät und einem Reservegerät verbunden ist, System, bei dem:
Ein Zielreservegerät, das so konfiguriert ist, dass es einen Verarbeitungszustand eines Zielsteuergeräts ermittelt, das ein gemeinsames Zielspeichergerät verwaltet, das mit dem Zielsteuergerät und dem Zielreservegerät verknüpft ist, und Daten in dem gemeinsamen Zielspeichergerät speichert und liest;
das Zielreservegerät ist weiter so konfiguriert, dass: wenn das Zielsteuergerät ausfällt, es eine Verwaltungsanforderung an das gemeinsame Zielspeichergerät sendet, und einen Ersatz für das Zielsteuergerät beim Clusterverwaltungknoten anfordert;
das gemeinsame Zielspeichergerät so konfiguriert ist, dass es das Zielreservegerät als lokales Verwaltungsgerät festlegt; und
der Clusterverwaltungsknoten so konfiguriert ist, dass er bestimmt, dass das Zielreservegerät ein Ersatzgerät für das Zielsteuergerät ist, so dass das Zielreservegerät Daten im gemeinsamen Zielspeichergerät speichert und liest und das gemeinsame Zielspeichergerät verwaltet, wobei das Zielreservegerät das Zielsteuergerät ersetzt, indem es Datenspeicherungs- und Datenlesedienste bereitstellt.

7. Das System gemäss Anspruch 6, bei dem die Verwaltungsanforderung Metadateninformation des Zielreservegeräts einschliesst und das gemeinsame Zielspeichergerät weiter so konfiguriert ist, dass es:
Bestimmt, dass das Zielreservegerät ein lokales Verwaltungsgerät des gemeinsamen Zielspeichergeräts ist, indem es Besitzinformation des gemeinsamen Zielspeichergeräts zur Metadateninformation des Zielreservegeräts wechselt.

8. Das System gemäss Anspruch 6, bei dem die Ersatzanforderung eine Knotenidentifizierung eines Speicherknotens, zu dem das Zielsteuergerät gehört, und Metadateninformation des Zielreservegeräts einschliesst, und der Clusterverwaltungsknoten weiter so konfiguriert ist, dass er:
Bestimmt, dass das Zielreservegerät das Ersatzgerät des Zielsteuergeräts ist, indem es Metadateninformation für die Knotenidentifizierung des Speicherknotens, zu dem das Zielsteuergerät gehört, zur Metadateninformation des Zielreservegeräts wechselt.

9. Das System gemäss Anspruch 6, bei dem jedes gemeinsame Speichergerät ausserdem mit mindestens einem im Ruhestand befindlichen Gerät verknüpft ist, und der Clusterverwaltungsknoten weiter so konfiguriert ist, dass er:
Wenn bestimmt wird, dass das Zielreservegerät ein Ersatzgerät für das Zielsteuergerät ist, willkürliche Festlegung eines im Ruhestand befindlichen Zielgeräts von mindestens einem im Ruhestand befindlichen Zielgerät, das mit dem gemeinsamen Zielspeichergerät verknüpft ist, um dem im Ruhestand befindlichen Zielgerät die Ermittlung eines Verarbeitungszustandes des Zielreservegeräts zu ermöglichen.

10. Das System gemäss Anspruch 8, bei dem der Clusterverwaltungsknoten weiter so konfiguriert ist, dass er:
Die Metadateninformation für die Knotenidentifizierung des Speicherknotens, zu dem das Zielsteuergerät gehört, in einer Knoteninformationsliste gemäss der Metadateninformation des Zielreservegeräts aktualisiert und Einspeicherung der aktualisierten Knoteninformationsliste an alle Speicherknoten innerhalb eines Speicherclusters.

## Revendications

1. Une méthode pour traiter une défaillance du dispositif dans un système de stockage distribué, le système de stockage distribué comprenant un nœud de gestion de clusters et une série de nœuds de stockage, chaque nœud de stockage comprenant un dispositif de stockage partagé, et chaque dispositif de stockage partagé étant lié à un dispositif de contrôle et à un dispositif de mise en veille, la méthode comprenant les pas suivants:
détecter (301), au moyen d'un dispositif cible de mise en veille lié à un dispositif cible de stockage partagé, un état de fonctionnement d'un dispositif cible de contrôle qui stocke et lit les données contenues dans le dispositif cible de stockage partagé et gère le dispositif cible de stockage partagé;
si le dispositif cible de contrôle est défaillant (302), envoyer, par le dispositif cible de mise en veille, une demande de gestion au dispositif cible de stockage partagé, et envoyer, par le dispositif cible de mise en veille, une demande de remplacement pour le dispositif cible de contrôle vers le nœud de gestion de clusters;
définir (303), par le dispositif cible de stockage partagé, le dispositif cible de mise en veille comme dispositif de gestion locale; et
déterminer (304), par le nœud de gestion de clusters, que le dispositif cible de mise en veille est un dispositif de remplacement du dispositif de contrôle cible, de telle manière que le dispositif cible de mise en veille stocke et lit les données contenues dans le dispositif cible de stockage partagé et gère le dispositif cible de stockage partagé, où le dispositif cible de mise en veille remplace le dispositif cible de contrôle en fournissant des services de stockage et lecture de données.

2. La méthode conformément à la revendication 1, où la demande de gestion comprend l'information des métadonnées du dispositif de mise en veille, et la définition, par le dispositif cible de stockage partagé, du dispositif cible de mise en veille comme dispositif de gestion locale, comprend le pas suivant:
déterminer, par le dispositif cible de stockage partagé, que le dispositif cible de mise en veille est le dispositif de gestion locale du dispositif cible de stockage partagé en modifiant l'information de propriété du dispositif cible de stockage partagé par l'information des métadonnées du dispositif cible de mise en veille.

3. La méthode conformément à la revendication 1, où la demande de remplacement comprend un identificateur de nœud d'un nœud de stockage auquel appartient le dispositif cible de contrôle et l'information des métadonnées du dispositif cible de mise en veille; et la détermination, par le nœud de gestion de clusters que le dispositif cible de mise en veille est le dispositif de remplacement du dispositif cible de contrôle, comprend le pas suivant: déterminer, par le nœud de gestion de clusters, que le dispositif cible de mise en veille est le dispositif de remplacement du dispositif cible de contrôle, en modifiant l'information des métadonnées, pour l'identificateur de nœud du nœud de stockage auquel le dispositif cible de contrôle appartient, par l'information des métadonnées du dispositif cible de mise en veille.

4. La méthode conformément à la revendication 1, où chaque dispositif de stockage partagé est lié, en outre, à au moins un dispositif inactif, et la méthode comprend, en outre, le pas suivant: lorsqu'il a été déterminé que le dispositif cible de mise en veille est le dispositif de remplacement du dispositif cible de contrôle, désigner aléatoirement, par le nœud de gestion de clusters, un dispositif cible inactif parmi au moins un dispositif inactif lié au dispositif cible de stockage partagé, pour permettre au dispositif cible inactif de détecter un état de fonctionnement du dispositif cible de mise en veille.

5. La méthode conformément à la revendication 3, après avoir déterminé par le nœud de gestion de clusters que le dispositif cible de mise en veille est le dispositif de remplacement du dispositif cible de contrôle, la méthode comprend en outre le pas suivant:
mettre à jour, par le nœud de gestion de clusters, l'information des métadonnées pour l'identificateur de nœud du nœud de stockage, auquel le dispositif cible de contrôle appartient, dans une liste d'information de nœuds vers l'information des métadonnées du dispositif cible de mise en veille, et pousser, par le nœud de gestion de clusters, la liste d'information de nœuds mise à jour vers tous les nœuds de stockage au sein d'un cluster de stockage.

6. Un système pour traiter les défaillances d'un dispositif dans un système de stockage distribué, le système de stockage distribué comprenant un nœud de gestion de clusters et une série de nœuds de stockage, chaque nœud de stockage comprenant un dispositif de stockage partagé, et chaque dispositif de stockage partagé étant lié à un dispositif de contrôle et à un dispositif de mise en veille; où
un dispositif cible de mise en veille est configuré pour détecter un état de fonctionnement d'un dispositif cible de contrôle qui gère un dispositif cible de stockage partagé lié à un dispositif cible de contrôle et à un dispositif cible de mise en veille, et il stocke et lit les données dans le dispositif cible de stockage partagé;
le dispositif cible de mise en veille est configuré en outre pour que: s'il y a une défaillance du dispositif cible de contrôle, envoyer une demande de gestion au dispositif cible de stockage partagé et envoyer une demande de remplacement pour le dispositif cible de contrôle vers le nœud de gestion de clusters;
le dispositif cible de stockage partagé est configuré pour déterminer que le dispositif cible de mise en veille est un dispositif de contrôle local; et
le nœud de gestion des clusters est configuré pour déterminer que le dispositif cible de mise en veille est un dispositif de remplacement du dispositif cible de contrôle, de telle manière que le dispositif cible de mise en veille stocke et lit les données du dispositif cible de stockage partagé et gère le dispositif cible de stockage partagé, où le dispositif cible de mise en veille remplace le dispositif cible de contrôle en fournissant les services de stockage et lecture de données.

7. Le système conformément à la revendication 6, où la demande de gestion comprend l'information des métadonnées du dispositif cible de mise en veille, et le dispositif cible de stockage partagé est en outre configuré pour:
déterminer que le dispositif cible de mise en veille est le dispositif de gestion locale du dispositif cible de stockage partagé en modifiant l'information de propriété du dispositif cible de stockage partagé par l'information des métadonnées du dispositif cible de mise en veille.

8. Le système conformément à la revendication 6, où la demande de remplacement comprend un identificateur de nœud d'un nœud de stockage auquel le dispositif cible de contrôle appartient et l'information des métadonnées du dispositif cible de mise en veille; et le nœud de gestion de clusters est configuré en outre pour:
déterminer que le dispositif cible de mise en veille est le dispositif de remplacement du dispositif cible de contrôle, en modifiant l'information des métadonnées pour l'identificateur de nœud du nœud de stockage auquel le dispositif cible de contrôle appartient, par l'information des métadonnées du dispositif cible de mise en veille.

9. Le système conformément à la revendication 6, où chaque dispositif de stockage partagé est en outre lié à au moins un dispositif inactif, et le nœud de gestion de clusters est en outre configuré pour que:
lorsqu'il est déterminé que le dispositif cible de mise en veille est le dispositif de remplacement du dispositif cible de contrôle, désigner aléatoirement un dispositif cible inactif à partir d'au moins un dispositif inactif lié au dispositif cible de stockage partagé pour permettre au dispositif cible inactif de détecter un état de fonctionnement du dispositif cible de mise en veille.

10. Le système conformément à la revendication 8, où le nœud de gestion de clusters est configuré en outre pour:
mettre à jour l'information des métadonnées pour l'identificateur de nœud du nœud de stockage auquel le dispositif cible de contrôle appartient, d'une liste d'information des nœuds vers l'information des métadonnées du dispositif cible de mise en veille, et pousser la liste d'information des nœuds mise à jour vers tous les nœuds de stockage au sein d'un cluster de stockage.
